(19)

**Europäisches Patentamt**

**European Patent Office**

**Office européen des brevets**

(11) **EP 2 436 071 B1**

(12) **EUROPEAN PATENT SPECIFICATION**

(45) Date of publication and mention of the grant of the patent:
**12.08.2015 Bulletin 2015/33**

(21) Application number: **10725017.7**

(22) Date of filing: **27.05.2010**

(51) Int Cl.:
*H01M 4/86* (2006.01)    *H01M 4/88* (2006.01)
*B41M 1/10* (2006.01)    *B41N 1/06* (2006.01)
*H01M 8/10* (2006.01)

(86) International application number:
**PCT/EP2010/003226**

(87) International publication number:
**WO 2010/136204 (02.12.2010 Gazette 2010/48)**

(54) **METHOD FOR PRODUCING CATALYST LAYERS FOR FUEL CELLS**

VERFAHREN ZUR HERSTELLUNG VON KATALYSATORSCHICHTEN FÜR BRENNSTOFFZELLEN

PROCÉDÉ DE FABRICATION DE COUCHES CATALYTIQUES POUR PILES À COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **29.05.2009 DE 102009023160
12.08.2009 EP 09010356**

(43) Date of publication of application:
**04.04.2012 Bulletin 2012/14**

(73) Proprietor: **SolviCore GmbH & Co KG
63457 Hanau-Wolfgang (DE)**

(72) Inventors:
• **BAUMANN, Reinhard
82152 Krailling (DE)**

• **WILLERT, Andreas
09127 Chemnitz (DE)**
• **SIEGEL, Frank
09112 Chemnitz (DE)**
• **KOHL, Albert
67229 Laumersheim (DE)**

(74) Representative: **Starz, Karl Anton
Umicore AG & Co KG
Patente
Rodenbacher Chaussee 4
63457 Hanau-Wolfgang (DE)**

(56) References cited:
**EP-A1- 0 344 089    WO-A1-01/32422
DE-A1- 2 624 930    JP-A- 61 133 946
JP-U- 64 048 234    US-A1- 2004 221 755**

**Description**

The present invention relates to a method for producing fuel cell components, in particular a gravure printing method for producing catalyst layers, electrodes and membrane electrode units ("MEUs") for polymer electrolyte membrane fuel cells ("PEM fuel cells").

Fuel cells convert a fuel and an oxidizing agent in separate locations from one another at two electrodes into electricity, heat and water. As a rule, hydrogen or a hydrogen-rich gas serves as fuel and oxygen or air as the oxidizing agent. The process of energy conversion in the fuel cell is distinguished by a particularly high efficiency. For this reason, fuel cells in combination with electric motors are becoming increasingly important as an alternative to conventional internal combustion engines. Owing to its compact design, its power density and its high efficiency, the PEM fuel cell is suitable for use as an energy converter in motor vehicles.

The PEM fuel cell consists of a stack of membrane electrode units ("MEU"), between which bipolar plates for gas supply and current discharge are arranged. A membrane electrode unit consists of a solid polymer electrolyte membrane which is provided on both sides with catalyst-containing reaction layers. One of the reaction layers is in the form of an anode for the oxidation of hydrogen and the second reaction layer is in the form of a cathode for the reduction of oxygen. So-called gas diffusion layers (GDLs) comprising carbon fiber paper or carbon felt which promote good access of the reaction gases to the electrodes and good discharge of the cell current are applied to these reaction layers. Anode and cathode contain so-called electrocatalysts which catalytically support the respective reaction (oxidation of hydrogen at the anode or reduction of oxygen at the cathode). Catalytically active components used are as a rule the noble metals, preferably the metals of the platinum group of the Periodic Table of the Elements (PGMs). The majority of so-called supported catalysts used are those in which the catalytically active platinum group metals were applied in highly dispersed form to the surface of a conductive support material.

The polymer electrolyte membrane consists of proton-conducting polymer materials. These materials are also referred to below as ionomers for short. Preferably, a tetrafluoroethylene-fluorovinyl ether copolymer having acid functions, in particular sulfo groups, is used. Such materials are marketed, for example, under the trade name Nafion® (E.I. du Pont) or Flemion® (Asahi Glass Co.). However, other, in particular fluorine-free, ionomer materials, such as sulfonated polyether ketones or aryl ketones or polybenzimidazoles, can also be used. Moreover, ceramic membranes and other high-temperature materials can also be used.

The performance data of a fuel cell depend decisively on the quality of the catalyst layers applied to the polymer electrolyte membrane. These layers are generally highly porous and usually consist of an ionomer and a finely divided electrocatalyst dispersed therein. Together with the polymer electrolyte membrane, so-called three-phase interfaces form in these layers, the ionomer being in direct contact with the electrocatalyst and the gases led to the catalyst particles via the pore system (hydrogen at the anode, air at the cathode).

In view of a broad market penetration of the fuel cell technology in the mobile sector, a substantial reduction in the costs for the production of fuel cells, in particular of electrodes and membrane electrode units, is necessary.

Standard methods which permit coating speeds (or production speeds) in the range from 0.5 m/min to 2 m/min (= 0.008 to 0.03 m/s) have been used to date for producing membrane electrode units. These are, for example, screen printing methods or knife coating methods. Substantially higher production speeds are required for use for mass production.

Coating methods having substantially higher speed are known from the area of print media. In this context, gravure printing technology is of particular interest. Gravure printing is used as a mass printing method in the printing of periodicals with long print runs and in the printing of packaging paper, decorative paper and securities. In the standard gravure printing method, screen patterns or dot patterns are produced but not cohesive areas.

The gravure printing method is of interest in particular because of the achievable high production speeds for mass production of fuel cell components. It permits a continuous process for substrate coating; moreover, the substrates can be coated in discrete patterns (printed images) or in solid, cohesive form in gravure printing.

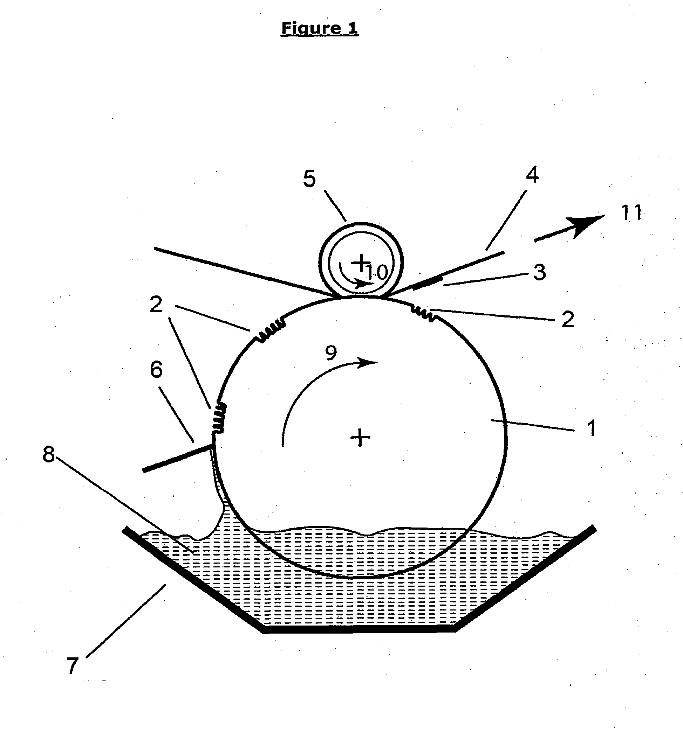

The mode of operation of the gravure printing method is well known to the person skilled in the art in the area of printing technology. A detailed discussion in this context is to be found in Helmut Kipphan (editor), Handbuch der Printmedien - Technologien und Produktionsverfahren [Handbook of print media - technologies and production processes], Springer-Verlag, Berlin (2000). The general principle of gravure printing is shown in **Figure 1**.

There, the meanings are as follows (cf. DIN 16528 - Begriffe fur den Tiefdruck [Definitions for gravure printing] in this context):

| | |
|---|---|
| 1 | printing plate cylinder (printing plate) |
| 2 | print image |
| 3 | print motif (printed catalyst layer) |
| 4 | substrate material |
| 5 | impression cylinder |

6       doctor with doctor blade
7       ink reservoir (inking system)
8       printing paste (ink, dispersion)
9       direction of rotation of printing cylinder
10      direction of rotation of impression cylinder
11      direction of movement of substrate material (printing direction)

In principle, in gravure printing, the ink present in an ink reservoir (7) is transferred to a roller-like printing plate cylinder (1) which moves in the direction of rotation (9). In the present application, this cylinder is referred to as "printing plate" or "sleeve". Print images or screen areas (2) are introduced as cells on the printing plate (1). The printing paste/ink (8) flows into the cells of the print image (2) and fills them. With the aid of a doctor having a doctor blade (6), the excess printing paste/ink (8) is scraped off the printing plate. Thereafter, the printing paste/ink remaining in the cells of the print image (2) is transferred by means of an impression cylinder (5) to the surface of a substrate (4). The impression produced by the printing process or the layer (3) produced on the substrate (4) is referred to as print motif (3) in the present application.

Alternatively, the doctor (6) and the ink reservoir (7) can be combined and may be in the form of a closed inking system (for example in the form of a "chambered doctor blade system"). The ink supply then takes place via a chamber. Supernatant material is scraped off with a doctor blade which runs directly on the surface of the printing plate cylinder (1). The arrangements of the ink chamber and doctor blade system are arbitrarily variable.

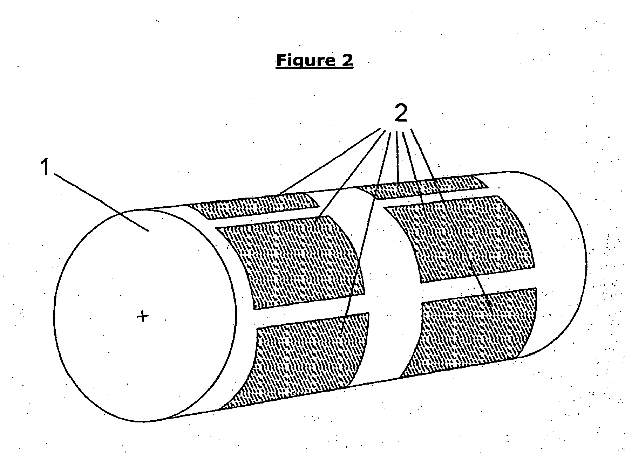

As is evident from **Figure 2**, a plurality of print images (2) can be provided on the printing plate cylinder (1). The number of print images is dependent on the available area of the printing plate cylinder and the size of the individual print images.

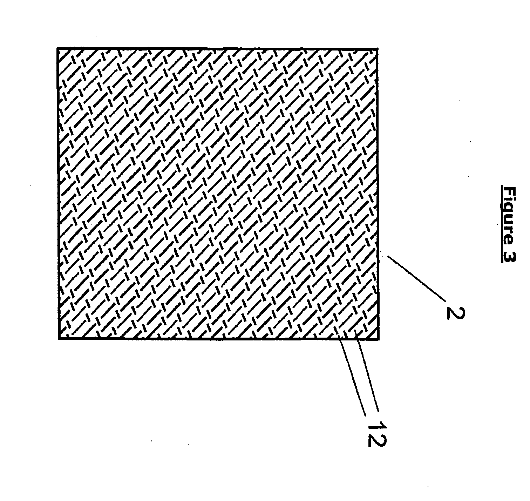

**Figure 3** shows an individual print image (2) in detail. The various bars (12) which form a screen or a screen structure are evident. This figure shows by way of example a line screen having additional transverse lines; however, all other screen structures according to the invention are also possible. The bars (12) represent partitions which separate the cells of a gravure printing plate from one another and, on scraping by the doctor blade (6), serve as a support for the latter.

Gravure printing permits a variable geometry of the desired print motif (3), i.e. elliptical or circular catalyst layers (print motifs) can also be produced in addition to rectangular ones. The amount of ink/paste transferred is determined by the dip volume of the printing plate (1) or the individual print images (2). High reproducibility of the layer thickness of the individual print motifs is obtained.

The use of gravure printing methods for producing electrodes and fuel cell components has already been proposed. Thus, DE 195 48 422 teaches a continuous production of material composites (i.e. MEU laminates) for fuel cells, screen printing, raised relief printing and gravure printing being used as coating methods. EP 1,037,295B2, too, discloses a method for applying electrode layers to a strip-like polymer electrolyte membrane for fuel cells. Screen printing is preferably used as the printing method. In both documents, the gravure printing method is mentioned but not described further.

US 6,967,038B2 and US 7,316,794 describe the production of catalyst-coated membranes by a flexographic raised relief printing method. This method comprises the use of preformed plates having raised reliefs which define the print motif. Catalyst paste is applied to the raised relief and is then transferred to the membrane. Disadvantages of this printing method are the inhomogeneous layer thickness and the poor edge definition of the print motifs.

US 6,280,879 discloses a method for producing electrode/current collector laminates for electrochemical apparatuses, in particular Li polymer batteries. The patent teaches a method for producing thick layers of an electrode material on a current collector foil with the aid of the gravure printing method.

US 2004/0221755A1 describes a gravure printing method for producing multilayer ceramic capacitors. Electrode paste is applied in the form of rectangular print motifs to a ceramic foil. Each print image ("image area") has bounding lines both parallel and perpendicular to the printing direction. As a result, individual cells are formed in the print images; nothing is known about the dip volume or the etch depth of these cells. The method is suitable in particular for highly viscous pastes containing metal powder.

WO 03/054991 A1 describes a gravure printing method for coating a fuel cell membrane with catalyst. The catalyst layers produced thereby are not homogeneous but have a multiplicity of three-dimensional structural units. The individual screen structures of the print image are present again in the catalyst layer. Owing to the lack of a continuous structure and the inhomogeneous layer thickness, the catalyst layers thus produced are not very suitable for PEM fuel cells.

EP 344089 A1 discloses a process for applying a fuel cell electrolyte matrix on an electrode by intaglio gravure printing. A conventional cell shape of a quadrangular pyramide is used.. Such screens create a typical saw-chain structure at the edges of the printed image and the edge definition is not satisfactory..

WO 01/32422 A1 and DT 2624930 A1 describe a gravure printing equipment with conventional criss-cross line screens Such screens are well known and state of the art in the graphic industry. They are not suitable for printing of thick and continuous layers, as the dip volume and the etch depth is too low and the typical cell structure (truncated pyramid) do not provide an adequate ink transfer and leveling process.

It is therefore an object of the present invention to provide an improved gravure printing method by means of which catalyst layers having a cohesive, continuous structure can be produced. The method should be capable of being operated continuously, should permit a high printing speed or production speed and should be capable of being used both for direct coating of ionomer membranes and for coating of other substrate materials (transfer picture substrates, decals, PET films, coated papers, carbon fiber cloth, etc.). The catalyst layers produced by the method should show good electrical power in the fuel cell.

This object is achieved by the method according to the present claims. Preferred embodiments of the method are mentioned in the dependent claims. Furthermore, a printing plate according to the invention is claimed.

The present invention relates to a gravure printing method for producing catalyst layers on substrate materials with the aid of catalyst-containing inks, wherein a printing plate is used which contains at least one print image which has an interrupted line screen. The longitudinal lines of this interrupted line screen are arranged at an angle $\alpha$ of from 10° to 80°, preferably at an angle $\alpha$ of from 20° to 70°, relative to the printing direction, said print image, having a dip volume in the range from 100 to 300 ml/m$^2$, preferably in the range from 150 to 250 ml/m$^2$. In a further possible embodiment, the printing plate (or the print image) has an etch depth in the range from 100 to 250 $\mu$m, preferably in the range from 120 to 200 $\mu$m.

The catalyst layers produced by the method according to the invention should be cohesive or continuous. They should have a dry layer thickness in the range from 1 to 20 $\mu$m, preferably in the range from 2 to 15 $\mu$m and particularly preferably in the range from 5 to 10 $\mu$m.

It has been found that this object can be achieved by providing suitable printing plates or print images. The experiments showed that the dry layer thickness necessary for the catalyst layer can be achieved if a sufficient amount of catalyst ink is transferred to the substrate. As a result, it was found that the printing plate (or the print image) should have a certain dip volume. The printing plates (or print images) suitable for the method according to the invention have dip volumes in the range from 100 to 300 ml/m$^2$; dip volumes in the range from 150 to 250 ml/m$^2$ are particularly suitable. This ensures that a sufficient volume of catalyst ink is transferred to the substrate. In the case of dip volumes which are too high, the ink is difficult to scrape off and this leads to print images which are not sharp (i.e. streaks outside the print images).

As was furthermore found in the experiments for the present invention, a printing plate (or print image) having an etch depth (H) in the range from 100 to 250 $\mu$m, preferably in the range from 120 to 200 $\mu$m, is necessary in order to achieve the desired dry layer thicknesses. These values are substantially above the printing plates used in gravure printing, whose etch depths are in the range from 10 to 50 $\mu$m.

Conventional gravure printing plates, such as criss-cross line screens or dot screens, have, as a rule, dip volumes of up to 40 ml/m$^2$. Such screens have a large number of regularly arranged cells which are filled with ink. In the printing process, the ink which has flowed into the cells is transferred to the substrate. In the course of the work, it was found that such conventional criss-cross line screens or dot screens are not very suitable for achieving the necessary dry layer thicknesses.

A further substantial aspect is the provision of a suitable screen structure or screen geometry for the printing plate. The screen structure suitable for the method according to the invention should occupy only a minimum volume in the transfer region on the printing plate (or in the print image) but should have a sufficient support function for the doctor (or the doctor blade) and permit good transfer of the ink to the substrate.

Surprisingly, the use of interrupted line screens has proven advantageous.

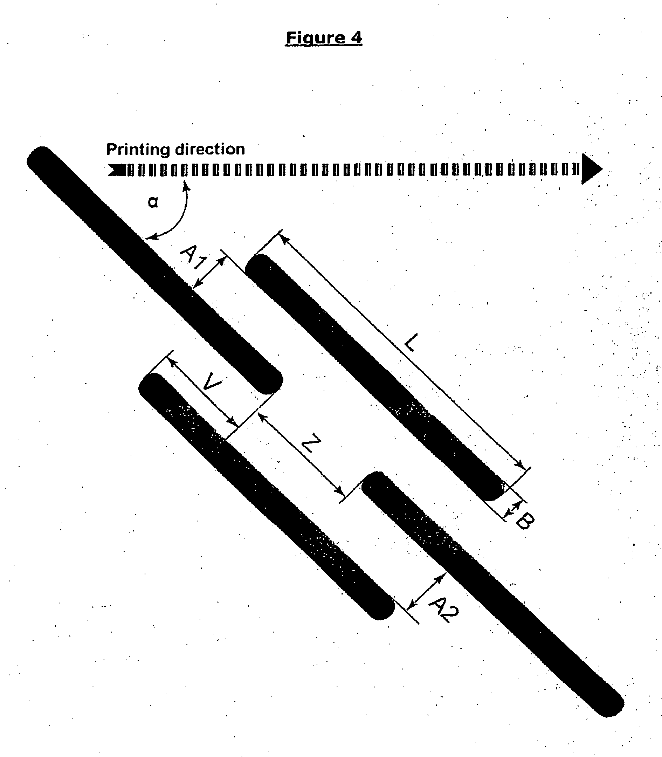

Such interrupted line screens have geometrical structural units which possess different length and width dimensions and different angles, optionally in combination. Within a print image, these structural units are repeated both one behind the other (i.e. in the x direction) and one above the other (i.e. in the y direction). The catalyst ink is present in the intermediate spaces between the individual lines or bars (12) of the print image (2) and is transferred to the substrate during the printing process. **Figures 4**, **5**, **6** and **7** schematically show the structure of the printing plates or print images according to the invention with linear screen structures. Below, the meanings are as follows:

L        = length of a longitudinal line  
B        = width of a longitudinal line  
A1, A2   = line spacings  
Z        = intermediate space between two lines of a row  
V, V1, V2 = row offset (positive and/or negative)  
$\alpha$        = angle between printing direction and longitudinal line

In principle, two stated angles which define the respective direction of rotation (+ $\alpha$ and - $\alpha$) are possible for

the angle $\alpha$ which defines the angle between the printing direction and the longitudinal lines. They result from the reflection of this angle at the printing direction as an axis. In the present patent application, the stated angle $\alpha$ comprises both directions of rotation or possibilities, especially since no observable differences in the arrangement of the line screen at the original or the reflected angle $\alpha$ relative to the printing direction have been found.

A further parameter for characterization of a gravure printing plate is the screen ruling F, defined in lines per unit of length (e. g. L/cm). The screen ruling is reciprocal to the sum of line spacing (A1, A2) and the width of the line next to the spacing (B) according to the following relationship:

$$F = 1 / A + B$$

In the case of different line spacings (A1 and A2), the screen ruling F is calculated as follows:

$$F = 1 / \tfrac{1}{2} (A1 + B + A2 + B) = 2 / (A1 + B + A2 + B)$$

For the printing plates or print images according to the present invention, the suitable values for the screen ruling F should be in the range of 5 L/cm to 20 L/cm, preferably in the range of 7 L/cm to 15 L/cm.

<u>Figure 4</u> shows an example of an interrupted line screen which has only parallel longitudinal lines but no transverse lines. In this example, the row offset V of the longitudinal lines is positive in each case, i.e. is in the form of an overlap.

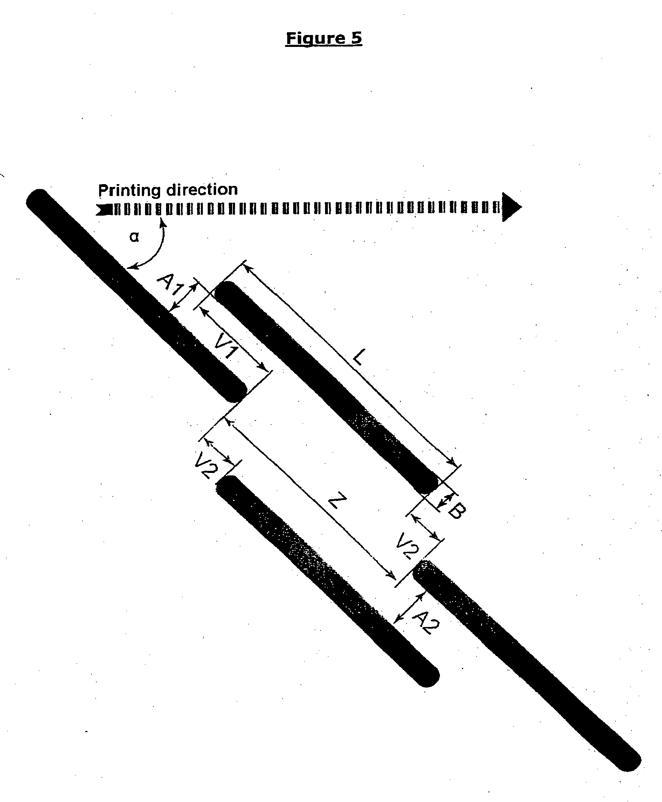

<u>Figure 5</u> shows an example of an interrupted line screen with longitudinal lines which have both a positive offset (V1) and a negative offset (V2), i.e. a gap.

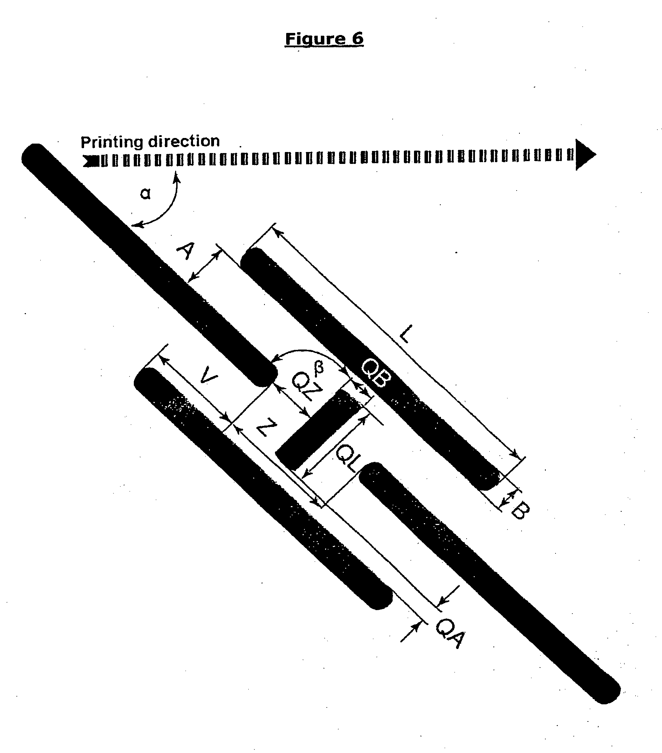

<u>Figure 6</u> illustrates an example of an interrupted line screen with longitudinal lines and transverse lines. The longitudinal lines are oriented with the angle $\alpha$ in the printing direction while the transverse lines are arranged at a certain angle $\beta$ to the longitudinal lines. Here, the meanings are additionally as follows:

QL = length of the transverse line
QB = width of the transverse line
QZ = intermediate space between transverse line and longitudinal line
$\beta$ = angle between transverse line and longitudinal line.

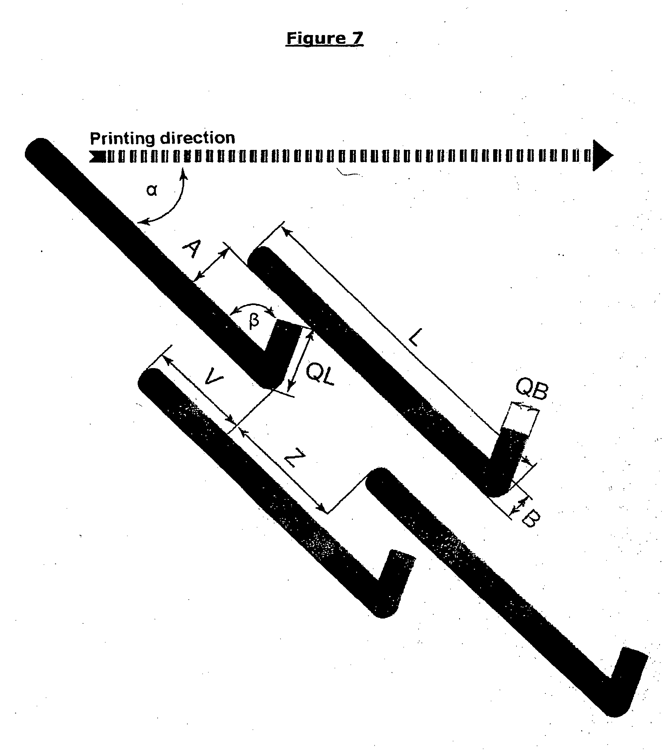

<u>Figure 7</u> likewise shows a line screen with longitudinal lines and transverse lines. The longitudinal lines are oriented at an angle $\alpha$ relative to the printing direction while the transverse lines make a certain angle $\beta$ with the longitudinal lines and no intermediate space QZ is present between transverse line and longitudinal line (i.e. QZ = 0).

In principle, all parameters, in particular lengths L, QL and widths B, QB and the row offset V, the intermediate space Z, the line spacing A and the angles $\alpha$ and $\beta$, are variable. Within a print image, these screen structures are repeated but they can also be varied within a print image in order, for example, to achieve better edge definition at the edge of the print image (for example in edge/center variations). In the extreme case, all these parameters can be arranged stochastically, comparable with stochastically frequency-modulated screens ("FM screens") in the graphic arts industry. The following ranges have proven advantageous for the parameters:

L = from 1 to 20 mm, preferably from 1 to 15 mm
B, QB = from 0.05 to 0.5 mm, preferably from 1 to 0.5 mm
A1,A2 = from 0.5 to 2 mm
Z = from 0.1 to 10 mm
V = (+/-) 0.1 to 10 mm
QL = from 0.1 to 4.5 mm
QZ = from 0 to 2.5 mm
$\alpha$ = from 10° to 80°, preferably from 20° to 70°
$\beta$ = from 5° to 175°, preferably from 60° to 120°.

As a rule, thinner line structures are preferable to the broader structures in the method according to the invention since the broader structures prevent the formation of a self-leveling, homogeneous film. The line widths B (longitudinal lines) and QB (transverse lines) should be in the range from 0.1 to 0.5 mm. Furthermore, it has been found that, in the case of line lengths L of the longitudinal lines in the range from 0.1 to 20 mm, preferably in the range from 1 to 15 mm, good support of the doctor blade and hence a good printed copy are achieved. For the line lengths of the transverse lines (QL), values in the range from 0.1 mm to 4.5 mm have proven most useful. (Minimum value for QL: width of a longitudinal line (B); maximum value for QL: sum of the values B + A1 + A2.) Excessively long line structures have proven disadvantageous. They result in transport of the ink in the printing direction owing to the adhesion of the ink to the doctor blade (ink "dislocation").

The suitable dimensions for the parameter Z (= intermediate space between two lines of a row) are in the range from 0.1 to 10 mm; suitable values for V (= row offset between the line rows) are in the range from 0.1 to 10 mm. The row offset V may be in the form of either an overlap (i.e. positive) or a gap (i.e. negative).

The interrupted line screens are arranged in the longitudinal direction (i.e. based on the length L) at an angle $\alpha$ of from 10° to 80°, preferably at an angle $\alpha$ of from 20° to 70°, relative to the printing direction. The optional transverse lines QL are arranged at an angle $\beta$ relative to the longitudinal lines L, the angle $\beta$ being in the range from 5° to 175°, preferably in the range from 60° to 120°. Longitudinal lines and transverse lines can, however, also meet one another at an angle $\beta$, a hook-shaped screen being formed (cf. **Figure 7**).

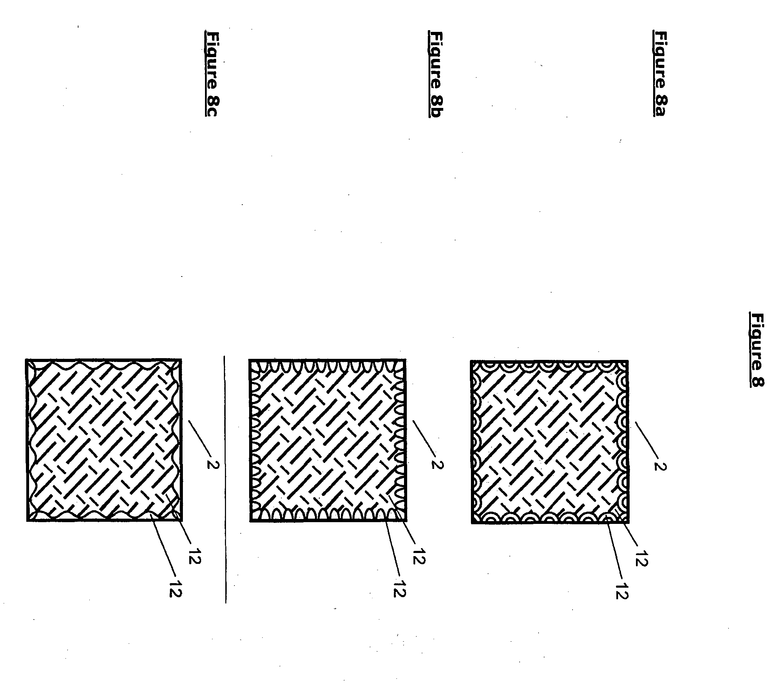

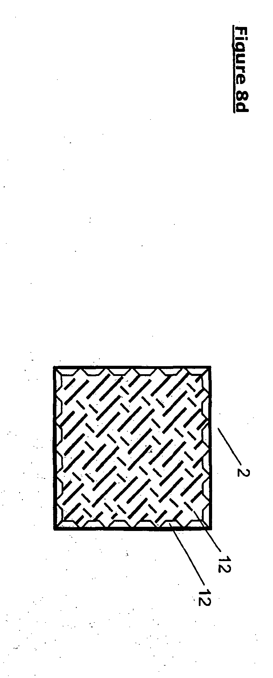

In a further embodiment of the present invention, line screens with a flexible design structure can be used. It was found that by modifications of the line screen with different structures at the rim of the print image, a better edge definition in the printed motif (the layer on the substrate) can be achieved. To improve the ink transfer, the use of screens with semicircles **(Figure 8a),** rounded triangles **(Figure 8b),** sinus waves **(Figure 8c)** or polygons **(Figure 8d)** is also suitable.

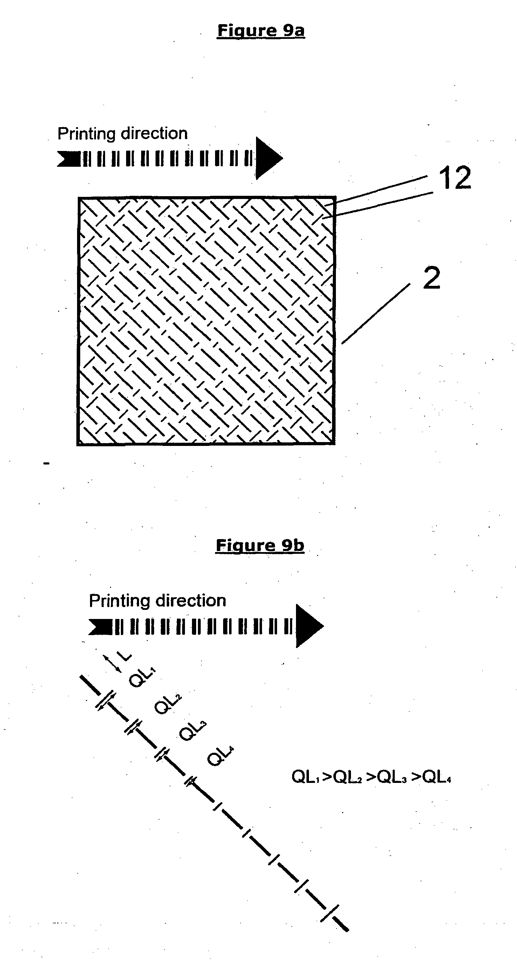

Mainly at the beginning and at the end of the print image, a dislocation of the printing ink is observed. It was found that this effect can be prevented by the use of screens with longer transversal lines in this region. **Figure 9** shows the modification of the length of the transversal lines (QL) against the printing direction. **Figure 9a** illustrates a print image on the gravure printing plate and the printing direction. It should be noted that the length of the transversal lines QL is decreasing towards the middle of the print image. Furthermore, the length of the transversal lines QL is decreasing and increasing in printing direction. For better illustration, **Figure 9b** shows a magnified section of **Figure 9a** with labeled L and QL.

The line screens with transversal lines mentioned above (e. g. **Figure 3** and **Figures 5** to **9**) provide smaller transversal lines compared to the longitudinal lines (QL < L). For this reason, the line screens have a preferred orientation in the printing direction.

In summary, it was found that, by means of the screen structures according to the invention, the transport movement ("dislocation") of the ink within the printing plate or the print image is reduced and a uniform print motif is achieved. Further advantages are the greater edge definition of the print motif, the stabilization of the doctor and the lower level of wear (e.g. abrasion, damage to bars, etc.) of the printing plate cylinder.

In a preferred embodiment of the present invention, a chambered doctor blade system is applied. This system improves the ink distribution on the gravure cylinder and helps to prevent the evaporation of ink solvents in the ink reservoir. In general, a chambered doctor blade system comprises a chamber where the ink is filled in, an operative doctor blade and a closing doctor blade. Normally, the closing doctor blade is angled against the direction of rotation (i.e. negatively angled). It was found by the inventors, that, in order to prevent catching of the doctor blade, it is advantageous to set the closing doctor blade in the direction of rotation, i.e. identical to the operative doctor blade. Furthermore, the chamber should envelop a major part of the gravure printing plate cylinder in order to maximize the real inking time and to decrease the evaporation of ink solvents.

The catalyst layers produced with the printing plates or print images according to the invention are cohesive and continuous. They generally have a dry layer thickness in the range from 1 to 20 $\mu$m, preferably in the range from 2 to 15 $\mu$m and particularly preferably in the range from 5 to 10 $\mu$m. In the standard gravure printing method, screen patterns or dot patterns are usually produced but not cohesive areas. With the method according to the invention, on the other hand, catalyst layers having a cohesive, continuous structure can be produced. In the resulting print motif, only a negligible surface structure is detectable; the catalyst layers have little surface roughness.

The production of printing plates, printing plate cylinders, print images and screen structures is known to the person skilled in the art in the area of gravure printing technology. The print images required for the method according to the invention and having interrupted line screens are exposed on a printing plate cylinder (or sleeve cylinder) and then etched to the desired depth in the range from 50 to 250 $\mu$m, preferably in the range from 100 to 200 $\mu$m. Diameter and circumference of the printing plate cylinder or sleeve cylinder are dependent on the type of gravure printing press and can be varied within wide limits. The finished printing plate sleeve is drawn onto the sleeve cylinder for the printing process so that the dimensional stability necessary for the printing process is present.

In principle, any catalyst pastes or catalyst inks having a very wide range of compositions can be used for the method according to the invention. The catalyst inks suitable for the method contain in principle at least one catalyst material, at least one ionomer material and at least one solvent. All catalysts known in the area of fuel cells, in particular electrocatalysts, can be used as catalyst materials. In the case of supported electrocatalysts, a finely divided, electroconductive material is generally used as a support, whereby carbon blacks or graphites, but also conductive oxides, can preferably be used. The noble metals, preferably the elements of the platinum group of the Periodic Table of the Elements (Pt, Pd, Ru, Rh, Os, Ir) or alloys thereof, serve as a catalytically active component. The catalytically active metals may contain further alloy additives, such as, for example, cobalt (Co), chromium (Cr), tungsten (W) or molybdenum (Mo). As a rule, supported catalysts (e.g. 40% by weight of Pt/C) in which the catalytically active platinum group metals are applied in finely divided form to the surface of a conductive carbon black support are used. For the production of the electrode layers, however, support-free catalysts, such as, for example, platinum blacks or platinum powder having a large surface area, can also be used.

As a rule, proton-conducting polymer materials are used as ionomer material. A tetrafluoroethylene-fluorovinyl ether copolymer having acid functions, in particular having sulfo groups, is preferably used. Such materials are marketed, for example, under the trade name Nafion® (Du Pont) or Flemion® (Asahi Glass Co.). Many fluorine-containing ionomer materials are obtainable in the form of solutions or dispersions in different concentrations. In addition, ionomers having different equivalent weights (EW) are also available from various manufacturers.

For achieving a homogeneous layer having a uniform layer structure, good leveling or "spreading" of the individual ink deposit after application should be achieved. For the gravure printing method according to the invention, catalyst inks having adapted rheological properties (i.e. adapted viscosity) should therefore be used. The viscosity of the inks should advantageously not be too high so that, after application, a certain leveling on the substrate material is possible. The solids content of the catalyst ink should, however, also not be too low, so that the required dry layer thickness can be achieved.

Suitable catalyst inks or catalyst dispersions have a viscosity in the range from 50 to 1000 mPa·s, preferably in the range from 50 to 900 mPas·s and particularly preferably in the range from 150 to 400 mPa·s (at a shear rate of D = 1000 s$^{-1}$, measured using a plate/cone viscometer). For the measurements for the present application, a plate/cone viscometer of the type MCR 300 from the company Physica (from Anton Paar GmbH, D-73760 Ostfildern) was used. However, devices of other manufacturers can also be used.

Suitable inks have a solids content (i.e. the sum of catalyst fraction and ionomer fraction) from 3 to 20% by weight, preferably from 5 to 20% by weight and particularly preferably a solids content from 7 to 16% by weight (measured in each case by the loss on drying, based on the total weight of ink taken). The loss on drying is determined on drying in a circulation drying oven at 120°C for 60 minutes.

In principle, all organic solvents which are suitable for catalyst inks which are processed in coating methods, in particular printing methods, can be used as solvents. Water-containing catalyst inks are preferred from environmental points of view and with regard to work safety.

The present invention provides a gravure printing method for producing continuous, cohesive catalyst layers on a very wide range of substrate materials. The printing parameters which are advantageous for the method according to the invention, such as production speed, throw-on angle of the doctor blade, doctor blade contact pressure, impression cylinder pressure and impression cylinder hardness, are stated below.

The impression cylinder is pressed onto the printing plate cylinder with a pressure from 2 to 10 bar, preferably from 3 to 6 bar. The impression cylinder hardness is usually in the range from 50 to 100 Shore. As a rule, a contact pressure of the doctor of from 1 to 2 bar is employed. The web speed (or printing speed) is in the range from 0.02 to 3 m/s, preferably in the range from 0.1 to 1 m/s. As a rule, stainless steel or plastic is used as material for the doctor or doctor blade. The throw-on angle of the doctor is in the range from 50 to 85°, preferably in the range from 60 to 83° (measured to the cylinder tangent of the printing plate cylinder). Such doctor angles give good results with the use of the catalyst inks according to the invention.

In a particular embodiment, a gravure printing unit having a closed inking system (i.e. chambered doctor blade system) is used. As a result, evaporation effects due to volatile solvents in the printing ink are avoided.

In principle, all strip-like ionomer membranes (in supported or unsupported form, as composites, as laminated membranes or as multilayer membranes), treated or untreated plastics films (polyesters, PET, polyamides, polyimides, etc.), transfer picture substrates ("decal substrates"), coated and/or treated papers, laminated films, but also carbon fiber substrates (such as, for example, carbon fiber webs, woven carbon fiber fabrics or carbon fiber papers) can be used as substrate materials. Suitable substrate materials should have little surface roughness and low thermal expansion, in order to ensure stable web running during printing and during the subsequent drying.

The drying after the printing can be effected by a batchwise and/or continuous method. For batchwise operation, drying ovens or drying cabinets are suitable; for continuous operation, it is possible to use, for example, continuous belt dryers, which can be integrated in the gravure printing unit. Preferably, the drying of the substrate web is effected by the in-line method using hot-air dryers or IR dryers. The temperature of the drying is typically from 20 to 150°C, and the drying parameters should be adapted to the respective method and are in general from a few seconds to several minutes.

As already mentioned, the catalyst layers produced by the method according to the invention are cohesive and continuous. They are as a rule opaque, i.e. they have a low light transmittance when viewed in the transmitted light mode. In the present application, the surface roughness is used as a measure of the homogeneity and the continuous structure of the applied catalyst layer. The surface texture is measured by the profile method according to DIN EN ISO 4287 (October 1998) via the determination of the $R_a$ value (= the arithmetic mean of the profile ordinates). For this purpose, the surface roughness is determined over a measuring distance of 1 mm length on a smooth substrate (PET film) and in each case the $R_a$ value is determined. The mean value of three measurements is calculated and is stated as the value. The device used is a tactile profilometer (tactile roughness measuring device). The measurements for the present application were carried out using the Veeco Dektak 8 (Veeco Instruments Inc; Plainview, NY 11803, USA). However, other devices can also be used for this purpose.

The catalyst layers produced furthermore have a dry layer thickness in the range from 1 to 20 μm, preferably in the range from 2 to 15 μm and particularly preferably in the range from 5 to 10 μm. The determination of the dry layer thickness is also effected using a profilometer (Veeco).

The layers produced according to the invention are cohesive and continuous and have low surface roughness. Typically, the $R_a$ value is in the range of < 10% of the respective dry layer thickness. This means that catalyst layers having a thickness of 1 μm have an $R_a$ value of < 0.1 μm, while catalyst layers having a thickness of not more than 20 μm have an $R_a$ value in the range < 2 μm. The layers produced in the examples and having a thickness of about 8 μm accordingly have $R_a$ values in the range < 0.8 μm.

An advantage of the gravure printing method according to the invention lies in the achievement of high printing speeds (or web speeds), values of from 0.02 to 3 m/s, preferably in the range from 0.1 to 1 m/s, being achieved. Furthermore, the method can be operated continuously and the drying process can be integrated into the method (for example as a roll-to-roll process). Production speeds of from 0.02 to 3 m/s, preferably from 0.1 to 1 m/s, are achievable thereby. Moreover, continuous, automated MEU production in which further steps, such as, for example, isolation, cutting to size and lamination of the substrates, are included is possible.

With the catalyst layers produced by the method according to the invention, membrane electrode units were produced and were tested in PEM fuel cells. The electrical performance values of the MEUs produced according to the invention are comparable with the values which are achieved with MEUs which are produced in the conventional production process.

The method according to the invention is to be described in more detail in the following examples.

## **Examples**

### General preliminary remarks

The experiments are effected on a laboratory gravure printing unit developed by ourselves, at room temperature and relative humidity of 30 - 50% relative humidity. In the case of the experiments carried out here, the sleeve cylinder produced has a diameter of 220 mm and hence a circumference of 691.2 mm. The finished printing plate sleeve is drawn onto the sleeve cylinder with the aid of compressed air for the printing process. Print images (screen segments) having a geometrical size of 3 x 3 cm² and 3 x 5 cm² are used. The printing plates used were produced by Sächsische Walzengravur GmbH (SWG, D-09669 Frankenberg). The web width is 35 mm. The gravure printing is effected using an chambered doctor blade system, a throw-on angle of 60° to the cylinder tangent being used. The printing ink supply is performed via a printing tank having a container pressure of 1.0 bar.

## **Example 1**

### Production of Pt catalyst layers on a decal substrate

A Pt-containing catalyst ink "DS4/type 31" (containing a carbon black-supported Pt catalyst of the type 20% by weight Pt/C and ionomer and organic solvents) is processed on the laboratory gravure printing press at a temperature of 21°C and relative humidity of 30%.

The viscosity of the ink is 350 mPa·s @ D = 1.000 s⁻¹ (measured with Physica MCR 300). The solids content is 13% by weight.

### Experimental parameters:

| | |
|---|---|
| Substrate: | decal film (polyester film, 80 μm thickness) |
| Printing speed: | 0.125 m/s |
| Etch depth of printing plate: | 180 μm |
| Screen structure: | long line screen (interrupted) |
| | angle $\alpha$ = 45° |

(continued)

|  |  |
|---|---|
| | A1 = 0.5 mm |
| | A2 = 2 x A1 = 1.0 mm |
| | B = 0.3 mm |
| | L = 12 mm |
| | Z = 8 mm |
| | V1 = 5 mm |
| | V2 = - 0.5 mm (negative offset) |
| | F = 10 L/cm (screen ruling) |
| Drying: | 40 s at 100°C (continuous drier) |
| Active area: | about 10 cm$^2$ (after printing) |
| Dry layer thickness: | 8 $\mu$m |
| Roughness: | cohesive, opaque layer |
| | R$_a$ = 0.66 $\mu$m (PET substrate, mean value) (Veeco Dektak 8) |
| Active area: | about 10 cm$^2$ (after printing) |

Electrochemical test:

Two print motifs printed on the decal film (active area 10 cm$^2$) are relaminated with the front and back of an ionomer membrane (type Nafion[©] 112, thickness 50 $\mu$m, H$^+$ form). The catalyst-coated membrane is processed with suitable GDLs ("gas diffusion layers") to give a 5-layer membrane electrode unit (MEU) and measured in a PEM fuel cell (single cell) in hydrogen/air operation (pressure 1 bar abs). The electrochemical performance of this MEU is comparable with the performance of an MEU produced in the standard printing method.

## Example 2

Production of Pt catalyst layers in the gravure printing method

The catalyst ink "DS4/type 31" is processed as described in example 1 on the laboratory gravure printing press. The printing plate used is a short line screen. The geometrical dimensions are stated below.

|  |  |
|---|---|
| Screen structure: | short line screen (interrupted) |
| | angle $\alpha$ = 25° |
| | A1 = A2 = 0.4 mm |
| | B = 0.3 mm |
| | L = 1.5 mm |
| | Z = 0.5 mm |
| | V = 0.4 mm |
| | F = 14 L/cm |

A 125 $\mu$m thick polyester film (PET) is used as the decal substrate. After drying in the continuous dryer, cohesive, opaque catalyst layers which have a dry layer thickness of 7 - 8 $\mu$m are obtained. The roughness R$_a$ is about 0.6 $\mu$m.

## Comparative example 1 (VB1)

Production of layers on a decal substrate in the gravure printing method (conventional criss-cross line screen)

A model ink of the type HWD 06 is processed on the laboratory gravure printing press at a room temperature of 21°C and a relative humidity of 30%. A decal film (polyester film, 80 $\mu$m thickness) is used as the substrate. The viscosity of the ink is 250 mPa·s @ 1.000 s$^{-1}$ (measured with Physica MCR 300). The solids content is 14% by weight.

Experimental parameters:

| Printing speed: | 0.4 m/s |
| Printing plate: | cell depth 53 $\mu$m |
| Dip volume: | 17 ml/m$^2$ |
| Screen structure: | printing plate DF 1 |
| | four-track criss-cross line screen (screen ruling F = 54 L/cm |
| Layer thickness: | about 0.7 $\mu$m (not homogeneous) |

After drying in the continuous dryer, cohesive, opaque catalyst layers are not obtained. The layer is transparent to light, the individual screen dots being recognizable as a pattern.

### Comparative Example 2 (VB2)

Production of layers on a decal substrate in the gravure printing method (closed and interrupted line screen at low angle ($\alpha$= 3°)

In these experiments, a laboratory gravure printing press was used at a web width of 140 mm. A model ink (type R-07-G, solids content 13% by weight, viscosity 200 mPas @ D = 1.000 s$^{-1}$) was employed for printing on a PET substrate. Printing conditions were 19 °C and 40% relative humidity.

Experimental parameters:

| Printing speed: | 0.2 m/s |
| Etch depth of printing plate: | 160 $\mu$m |
| Printing plate: | Closed line screen (a) |
| | Interrupted line screen (b) |
| Screen structure (a) and (b): | angle $\alpha$ = 3° |
| | A1 = A2 = 1.1 mm |
| | B = 0.3 mm |
| | L= 6 mm |
| | Z= 1.5 mm |
| | V= 0.5 mm |

After drying, the printed electrodes were examined visually. The closed line screen (a) with angle $\alpha$= 3° shows many print deflects, particularly in the middle region and on the edges of the printed motif due to dislocation of the ink by the doctor blade. The printed electrodes made with an interrupted line screen (b) with angle $\alpha$ = 3° revealed some printing defects and a low edge definition.

### Claims

1. A gravure printing method for producing catalyst layers on substrate materials using a catalyst-containing ink, a printing plate being used which has at least one print image with an interrupted line screen whose longitudinal lines are arranged at an angle $\alpha$ of from 10° to 80°, preferably at an angle $\alpha$ of from 20° to 70°, relative to the printing direction, said print image having a dip volume in the range from 100 to 300 ml/m$^2$.

2. The method as claimed in claim 1, the print image having a dip volume in the range from 150 to 250 ml/m$^2$.

3. The method as claimed in claim 1 or 2, the print image having etch depths in the range from 100 to 250 $\mu$m, preferably in the range from 120 to 200 $\mu$m.

4. The method as claimed in any of claims 1 to 3, the catalyst layers produced having a dry layer thickness in the range from 1 to 20 $\mu$m, preferably in the range from 2 to 15 $\mu$m.

5. The method as claimed in any of claims 1 to 4, the longitudinal lines of the line screen having line lengths L in the range from 0.1 to 20 mm and line widths B in the range from 0.05 to 0.5 mm.

6. The method as claimed in any of claims 1 to 5, the interrupted line screen having at least one intermediate space Z between two lines of a row, whose dimensions are in the range from 0.1 to 20 mm.

7. The method as claimed in any of claims 1 to 6, the print image having a line screen with additional transverse lines, the transverse lines having line lengths (QL) in the range from 0.1 mm to 4.5 mm and which are arranged at an angle $\beta$ in the range from 5° to 175° relative to the longitudinal lines.

8. The method as claimed in any of claims 1 to 7, the interrupted line having a screen ruling from 5 L/cm to 20 L/cm.

9. The method as claimed in any of claims 1 to 8, the catalyst layers produced having a low surface roughness and the $R_a$ value being < 10% of the respective dry layer thickness.

10. The method as claimed in any of claims 1 to 9, the substrate materials used being ionomer membranes (in supported or unsupported form), composite membranes, laminated membranes, multilayer membranes, treated or untreated plastics films (such as, for example, polyesters, polyamides or polyimides), transfer picture substrates, decal substrates, coated or treated papers, laminated films and carbon fiber substrates (such as, for example, carbon fiber webs, woven carbon fiber fabrics or carbon fiber papers).

11. The method as claimed in any of claims 1 to 10, the catalyst-containing ink comprising at least one electrocatalyst, at least one ionomer and at least one solvent.

12. The method as claimed in any of claims 1 to 11, the catalyst-containing ink having a solids content in the range from 3 to 20% by weight (measured as loss on drying at 120°C/60 minutes).

13. The method as claimed in any of claims 1 to 12, the catalyst-containing ink having a viscosity in the range from 50 to 1.000 mPa·s, preferably in the range from 150 to 400 mPa·s (measured using a plate/cone system).

14. The method as claimed in any of claims 1 to 13, the ink supply being effected via a chambered doctor blade system

15. The method as claimed in any of claims 1 to 14, **characterized in that** it is effected continuously, preferably in a roll-to-roll method.

16. The method as claimed in any of claims 1 to 15, the printing speed being in the range from 0.02 to 3 m/s.

17. The method as claimed in any of claims 1 to 16 said method being used for producing electrodes and membrane electrode units for fuel cells.

18. A gravure printing plate for producing catalyst layers on substrate materials, **characterized in that** it has at least one print image with an interrupted line screen whose longitudinal lines are arranged at an angle $\alpha$ of from 10° to 80°, preferably at an angle $\alpha$ of from 20° to 70°, relative to the printing direction, said print image having a dip volume in the range from 100 to 300 ml/m$^2$.

**Patentansprüche**

1. Tiefdruckverfahren zur Erzeugung von Katalysatorschichten auf Substratmaterialien mit einer katalysatorhaltigen Tinte, wobei eine Druckform eingesetzt wird, die mindestens ein Druckbild mit einem unterbrochenen Linienraster aufweist, dessen Längslinien in einem Winkel $\alpha$ von 10° bis 80°, vorzugsweise in einem Winkel $\alpha$ von 20° bis 70° gegen die Druckrichtung angeordnet sind, wobei das Druckbild ein Schöpfvolumen im Bereich von 100 bis 300 ml/m$^2$ aufweist.

2. Verfahren nach Anspruch 1, wobei das Druckbild ein Schöpfvolumen im Bereich von 150 bis 250 ml/m$^2$ aufweist.

3. Verfahren nach Anspruch 1 oder 2, wobei das Druckbild Ätztiefen im Bereich von 100 bis 250 $\mu$m, vorzugsweise im Bereich von 120 bis 200 $\mu$m aufweist.

**4.** Verfahren nach einem der Ansprüche 1 bis 3, wobei die erzeugten Katalysatorschichten eine Trockenschichtdicke im Bereich von 1 bis 20 $\mu$m, vorzugsweise im Bereich von 2 bis 15 $\mu$m aufweisen.

**5.** Verfahren nach einem der Ansprüche 1 bis 4, wobei die Längslinien des Linienrasters Linienlängen L im Bereich von 0,1 bis 20 mm und Linienbreiten B im Bereich von 0,1 bis 0,5 mm aufweisen.

**6.** Verfahren nach einem der Ansprüche 1 bis 5, wobei das unterbrochene Linienraster mindestens einen Zwischenraum Z zwischen zwei Linien einer Reihe besitzt, dessen Abmessungen im Bereich von 0,1 bis 20 mm liegen.

**7.** Verfahren nach einem der Ansprüche 1 bis 6, wobei das Druckbild ein Linienraster mit zusätzlichen Querlinien besitzt, wobei die Querlinien Linienlängen (QL) im Bereich von 0,1 mm bis 4,5 mm aufweisen und in einem Winkel $\beta$ im Bereich von 5° bis 175° relativ zu den Längslinien angeordnet sind.

**8.** Verfahren nach einem der Ansprüche 1 bis 7, wobei die unterbrochene Linie eine Rasterweite von 5 L/cm bis 20 L/cm aufweist.

**9.** Verfahren nach einem der Ansprüche 1 bis 8, wobei die hergestellten Katalysatorschichten eine niedrige Oberflächenrauigkeit besitzen und der $R_a$-Wert < 10% der jeweiligen Trockenschichtdicke beträgt.

**10.** Verfahren nach einem der Ansprüche 1 bis 9, wobei als Substratmaterialien Ionomermembranen (in gestützter oder ungestützter Form), Compositmembranen, Verbundmembranen, Mehrschichtmembranen, behandelte oder unbehandelte Kunststoff-Folien (wie beispielsweise Polyester, Polyamide oder Polyimide), Abziehbildsubstrate, Decal-Substrate, beschichtete oder behandelte Papiere, Verbundfolien sowie Kohlefasersubstrate (wie beispielsweise Kohlefaservliese, Kohlefasergewebe oder Kohlefaserpapiere) eingesetzt werden.

**11.** Verfahren nach einem der Ansprüche 1 bis 10, wobei die katalysatorhaltige Tinte mindestens einen Elektrokatalysator, mindestens ein Ionomer sowie mindestens ein Lösungsmittel enthält.

**12.** Verfahren nach einem der Ansprüche 1 bis 11, wobei die katalysatorhaltige Tinte einen Feststoffanteil im Bereich von 3 bis 20 Gew.-% besitzt (gemessen als Trocknungsverlust bei 120°C/60 Minuten).

**13.** Verfahren nach einem der Ansprüche 1 bis 12, wobei die katalysatorhaltige Tinte eine Viskosität im Bereich von 50 bis 1.000 mPas, vorzugsweise im Bereich von 150 bis 400 mPas (gemessen mit einem Platte/Kegel-System) aufweist.

**14.** Verfahren nach einem der Ansprüche 1 bis 13, wobei die Tintenzufuhr über ein Kammerrakelsystem erfolgt.

**15.** Verfahren nach einem der Ansprüche 1 bis 14, **dadurch gekennzeichnet, dass** es kontinuierlich, vorzugsweise in einem Rolle-zu-Rolle-Verfahren erfolgt.

**16.** Verfahren nach einem der Ansprüche 1 bis 15, wobei die Druckgeschwindigkeit im Bereich von 0,02 bis 3 m/s liegt.

**17.** Verwendung des Verfahrens nach einem der Ansprüche 1 bis 16 zur Herstellung von Elektroden und Membran-Elektroden-Einheiten für Brennstoffzellen.

**18.** Tiefdruckform zur Herstellung von Katalysatorschichten auf Substratmaterialien, **dadurch gekennzeichnet, dass** sie mindestens ein Druckbild mit einem unterbrochenen Linienraster aufweist, dessen Längslinien in einem Winkel $\alpha$ von 10° bis 80°, vorzugsweise in einem Winkel $\alpha$ von 20° bis 70° gegen die Druckrichtung angeordnet sind, wobei das Druckbild ein Schöpfvolumen im Bereich von 100 bis 300 ml/m$^2$ aufweist.

**Revendications**

**1.** Procédé d'héliogravure pour produire des couches de catalyseur sur des matériaux substrats en utilisant une encre contenant un catalyseur, une plaque d'impression étant utilisée, laquelle a au moins une image imprimée avec une trame à lignes interrompues dont les lignes longitudinales sont disposées à un angle $\alpha$ de 10° à 80°, de préférence à un angle $\alpha$ de 20° à 70°, par rapport à la direction d'impression, ladite image imprimée ayant un volume d'immersion dans la gamme de 100 à 300 ml/m$^2$.

**2.** Procédé selon la revendication 1, l'image imprimée ayant un volume d'immersion dans la gamme de 150 à 250 ml/m2.

**3.** Procédé selon la revendication 1 ou 2, l'image imprimée ayant des profondeurs de gravure dans la gamme de 100 à 250 $\mu$m, de préférence dans la gamme de 120 à 200 $\mu$m.

**4.** Procédé selon l'une quelconque des revendications 1 à 3, les couches de catalyseur produites ayant une épaisseur de couche sèche dans la gamme de 1 à 20 $\mu$m, de préférence dans la gamme de 2 à 15 $\mu$m.

**5.** Procédé selon l'une quelconque des revendications 1 à 4, les lignes longitudinales de la trame à lignes ayant des longueurs de ligne L dans la gamme de 0,1 à 20 mm et des largeurs de ligne B dans la gamme de 0,05 à 0,5 mm.

**6.** Procédé selon l'une quelconque des revendications 1 à 5, la trame à lignes interrompues ayant au moins un espace intermédiaire Z entre deux lignes d'une rangée, dont les dimensions se situent dans la gamme de 0,1 à 20 mm.

**7.** Procédé selon l'une quelconque des revendications 1 à 6, l'image imprimée ayant une trame à lignes avec des lignes transversales supplémentaires, les lignes transversales ayant des longueurs de ligne (QL) dans la gamme de 0,1 mm à 4,5 mm et étant disposées à un angle $\beta$ dans la gamme de 5° à 175° par rapport aux lignes longitudinales.

**8.** Procédé selon l'une quelconque des revendications 1 à 7, la ligne interrompue ayant une linéature de trame de 5 L/cm à 20 L/cm.

**9.** Procédé selon l'une quelconque des revendications 1 à 8, les couches de catalyseur produites ayant une faible rugosité de surface et la valeur $R_a$ étant < 10 % de l'épaisseur de couche sèche respective.

**10.** Procédé selon l'une quelconque des revendications 1 à 9, les matériaux substrats utilisés étant des membranes ionomères (sur support ou sans support), des membranes composites, des membranes stratifiées, des membranes multicouches, des films plastiques traités ou non traités (tels que des polyesters, des polyamides ou des polyimides, par exemple), des substrats d'image de transfert, des substrats de décalcomanie, des papiers couchés ou traités, des films stratifiés et des substrats de fibres de carbone (tels que des nappes de fibres de carbone, des tissus de fibres de carbone ou des papiers de fibres de carbone, par exemple).

**11.** Procédé selon l'une quelconque des revendications 1 à 10, l'encre contenant un catalyseur comprenant au moins un électrocatalyseur, au moins un ionomère et au moins un solvant.

**12.** Procédé selon l'une quelconque des revendications 1 à 11, l'encre contenant un catalyseur ayant une teneur en matières solides dans la gamme de 3 à 20 % en poids (mesurée comme la perte au séchage à 120 °C/60 minutes).

**13.** Procédé selon l'une quelconque des revendications 1 à 12, l'encre contenant un catalyseur ayant une viscosité dans la gamme de 50 à 1000 mPa·s, de préférence dans la gamme de 150 à 400 mPa·s (mesurée en utilisant un système plaque/cône).

**14.** Procédé selon l'une quelconque des revendications 1 à 13, l'alimentation en encre étant effectuée par le biais d'un système de chambre à racles.

**15.** Procédé selon l'une quelconque des revendications 1 à 14, **caractérisé en ce qu'**il est effectué en continu, de préférence dans un procédé de rouleau à rouleau.

**16.** Procédé selon l'une quelconque des revendications 1 à 15, la vitesse d'impression se situant dans la gamme de 0,02 à 3 m/s.

**17.** Procédé selon l'une quelconque des revendications 1 à 16, ledit procédé étant utilisé pour produire des électrodes et des unités membrane-électrodes pour piles à combustible.

**18.** Plaque d'héliogravure pour produire des couches de catalyseur sur des matériaux substrats, **caractérisée en ce qu'**elle a au moins une image imprimée avec une trame à lignes interrompues dont les lignes longitudinales sont disposées à un angle $\alpha$ de 10° à 80°, de préférence à un angle $\alpha$ de 20° 70°, par rapport à la direction d'impression, ladite image imprimée ayant un volume d'immersion dans la gamme de 100 à 300 ml/m$^2$.

## Figure 1

**Figure 2**

## Figure 3

## Figure 4

## Figure 5

## Figure 6

## Figure 7

Printing direction

## Figure 8

**Figure 8a**

**Figure 8b**

**Figure 8c**

**Figure 8d**

## Figure 9a

Printing direction

12

2

## Figure 9b

Printing direction

$QL_1 > QL_2 > QL_3 > QL_4$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19548422
- EP 1037295 B2
- US 6967038 B2
- US 7316794 B
- US 6280879 B
- US 20040221755 A1
- WO 03054991 A1
- EP 344089 A1
- WO 0132422 A1
- WO DT2624930 A1

**Non-patent literature cited in the description**

- Handbuch der Printmedien - Technologien und Produktionsverfahren. Springer-Verlag, 2000